(19) Europäisches Patentamt

European Patent Office

Office européen des brevets

(11) **EP 0 575 851 B1**

(12) **EUROPÄISCHE PATENTSCHRIFT**

(45) Veröffentlichungstag und Bekanntmachung des Hinweises auf die Patenterteilung:
**28.08.1996   Patentblatt 1996/35**

(51) Int Cl.$^6$: **C08L 21/00**, C08L 19/00

(21) Anmeldenummer: **93109466.8**

(22) Anmeldetag: **14.06.1993**

(54) **Kautschukmischungen enthaltend Polybutadien-Gel**

Rubber compositions containing polybutadiene-gel

Compositions de caoutchouc contenant du polybutadiène en gel

(84) Benannte Vertragsstaaten:
**DE ES FR GB IT**

(30) Priorität: **24.06.1992   DE 4220563**

(43) Veröffentlichungstag der Anmeldung:
**29.12.1993   Patentblatt 1993/52**

(73) Patentinhaber: **BAYER AG**
**51368 Leverkusen (DE)**

(72) Erfinder:
- **Obrecht, Werner, Dr.**
  **D-4130 Moers (DE)**
- **Wendling, Peter**
  **D-5090 Leverkusen (DE)**
- **Schuster, Robert Hans, Dr.**
  **D-3000 Hannover (DE)**
- **Bischoff, Andreas**
  **D-3000 Hannover 1 (DE)**

(56) Entgegenhaltungen:
**EP-A- 0 361 667          EP-A- 0 450 983**
**GB-A- 1 078 400**

**Beschreibung**

Die Erfindung betrifft Mischungen aus C=C-Doppelbindungen enthaltenden Kautschuken und Polybutadien-Gel (BR-Gele) sowie daraus hergestellte Vulkanisate. Die Vulkanisate zeigen eine günstige Kombination der Eigenschaften Hystereseverlust und Abriebbeständigkeit.

Unter Hystereseverlust versteht man in der Kautschuktechnologie die Energiemenge, die bei dynamischer Beanspruchung des Elastomeren irreversibel in Wärme umgewandelt wird. Als Meßgröße für Hystereseverluste dient der tan δ, der als Verhältnis von Verlustmodul zu Speichermodul definiert ist; vgl. z.B. auch DIN 53 513, DIN 53 535. Erniedrigung des tan δ im anwendungstechnisch wichtigen Temperatur/Frequenz- bzw. Amplituden-Bereich führt z.B. zu vermindertem Hitzeaufbau ("heat built-up") im Elastomeren. Reifenlaufflächen aus Kautschukvulkanisat mit vermindertem Hystereseverlust zeichnen sich durch reduzierten Rollwiderstand und infolgedessen durch geringeren Treibstoffverbrauch der damit ausgestatteten Fahrzeuge aus. Die Abriebbeständigkeit ist ein Maß für die Nutzungsdauer einer Reifenlauffläche.

Trotz der Vielfalt verfügbarer Kautschuktypen hat sich für die Herstellung von Fahrzeugreifen die Aufmerksamkeit der Fachwelt vor allem auf Naturkautschuk (NR), cis-Polybutadien (BR) und Styrol/Butadien-Copolymerisate (SBR) gerichtet. Diese Kautschuke oder ihre Mischungen werden bei der Reifenherstellung weltweit verwendet.

In der Literatur sind zahlreiche Versuche bekannt, den Rollwiderstand der Reifenlauffläche zu reduzieren. Ein Weg, der beschrieben wurde, sind Mischungen aus C=C- Doppelbindungen enthaltenen Kautschuken und Schwefelmodifiziertem Polychloropren-Gel (EP 405 216). Nachteile bei der Verwendung von CR-Gel ergeben sich jedoch aus dem Kautschukpreis und den beim Recycling-Prozeß von Altreifen zu erwartenden ökologischen Problemen wegen der chlorhaltigen Komponente.

Aufgabe der Erfindung war es, Kautschukmischungen zur Verfügung zu stellen, die sich zu Vulkanisaten mit einem geringen Rollwiderstand - ausgedrückt als niedriger Hystereseverlust (tan δ) - und einem möglichst geringen Abrieb verarbeiten lassen und die o.g. Nachteile der Verwendung von CR-Gel vermeiden.

Überraschenderweise wurde nun gefunden, daß Kautschuk-Mischungen mit einem Gehalt an Polybutadien-Gel diese Anforderungen erfüllen.

Gegenstand der Erfindung sind daher Mischungen aus

A) Polybutadien-Gel und

B) anderen C=C-Doppelbindungen enthaltenden Kautschuken,

wobei, bezogen auf die Summe A) + B), die Menge an Polybutadien-Gel A) 1 bis 70, vorzugsweise 3 bis 50 Gew.-%, beträgt.

Der Quellungsindex ($Q_i$) geeigneter Polybutadien-Gele A, im folgenden BR-Gel A genannt, beträgt in Toluol 1 bis 90, vorzugsweise 1 bis 50, und wird aus dem Gehalt des im Gel (bei einer Zentrifugation mit 500.000 m/sec$^2$ ) verbleibenden Toluols ($m_T$) und dem Trockengewicht des Gels ($m_{Gel}$) berechnet:

$$Q_i = \frac{m_T}{m_{Gel}}$$

Hierzu werden 150 mg des BR-Gels A in 20 ml Toluol 16 Stunden stehen gelassen und danach 2 Stunden geschüttelt. Das Gel wird abzentrifugiert und feucht gewogen, bei 70°C bis zur Gewichtskonstanz getrocknet und gewogen.

Die Herstellung von Polybutadien-Gel A erfolgt durch Emulsionspolymerisation (s. z.B. M. Morton, P.P. Salatiello, H. Landfield, J. Polym. Sci. 8,2 (1952) 215-224; P.A. Weerts, J.L.M. van der Loos, A.L. German, Makromol. Chem. 190 (1989) 777-788).

Die Größe der Latexteilchen (DVN-Wert nach DIN 53 206) beträgt 30 bis 500 nm.

Dabei kann die Vernetzung zum Gel sowohl wahrend, als auch nach erfolgter Polymerisation durchgeführt werden. Die Vernetzung muß keineswegs vollständig sein, auch geringe (z.B. 20 Gew.-%) aus der Art der Herstellung resultierende lösliche BR-Anteile sind erlaubt.

Die Vernetzung während der Polymerisation kann durch Polymerisation bis zu hohen Umsätzen oder - bei Monomerzulaufverfahren - durch Polymerisation bei hohen internen Umsätzen erfolgen. Die Vernetzung des Polybutadiens kann auch durch Copolymerisation vernetzend wirkender multifunktioneller Verbindungen erreicht werden. Bevorzugte vernetzend wirkende multifunktionelle Comonomere sind Verbindungen mit mindestens 2, vorzugsweise 2 oder 3, copolymerisierbaren C=C-Doppelbindungen, wie z.B. Diisopropenylbenzol, Divinylbenzol, Divinylether, Divinylsulfon, Diallylphthalat, Triallylcyanurat, Triallylisocyanurat, 1,2-Polybutadien, N,N'-m-Phenylendimaleinimid, Triallyltrimellitat sowie die Acrylate und Methacrylate von mehrwertigen, vorzugsweise zwei- bis vierwertigen, $C_2$-$C_{10}$-Alkoholen, wie z.B. von Ethylenglykol, Propandiol-1,2, Propandiol-1,3, Butandiol-1,4, Hexandiol-1,6, Polyethylenglykol mit 2 bis 20, vorzugsweise 2 bis 4, Oxyethyleneinheiten, Trimethylolethan und -propan, Tetramethylolmethan.

Auch die Herstellung durch Polymerisation in Abwesenheit von Reglern ist möglich.

Die Vernetzung nach erfolgter Polymerisation, kann beispielsweise in der Latexstufe (in Abwesenheit von nicht umgesetztem Monomer) mit organischen Peroxiden unter erhöhtem Druck und bei Temperaturen von 140 bis 170°C durchgeführt werden (Houben-Weyl, Methoden der organischen Chemie, 4. Aufl., Bd. 14/2, S. 848, Eugen Müller (Hrsg.), G. Thieme-Verlag, Stuttgart, 1963).

Bevorzugte Kautschuke B) enthalten C=C-Doppelbindungen entsprechend Iodzahlen von mindestens 2, vorzugsweise 5 bis 470. Die Bestimmung der Iodzahlen erfolgt im allgemeinen durch Addition von Iodchlorid in Essigsäure nach Wijs, DIN 53 241, Teil 1. Die Iodzahl definiert die Iodmenge in Gramm, die von 100 g Substanz chemisch gebunden wird.

Die Kautschuke B) umfassen u.a. EPDM, Butylkautschuk, Nitrilkautschuk, hydrierten Nitrilkautschuk, Naturkautschuk, Polyisopren, Polybutadien und Styrol/Butadien-Copolymerisate (SBR) sowie Gemische derselben.

Die Kautschuke B) besitzen in der Regel Mooney-Viskositäten (DIN 53 523) von 10 bis 150, vorzugweise von 25 bis 80 (ML 1+4)/100°C.

Der Ausdruck "EPDM" steht für Ethylen/Propylen/Dien-Terpolymerisate. EPDMs umfassen Kautschuke, in denen das Gewichtsverhältnis von Ethylen- zu Propylenresten im Bereich von 40:60 bis 65:35 liegt und die 1 bis 20 C=C-Doppelbindungen/1.000 C-Atome aufweisen können. Als geeignete Dien-Monomere im EPDM seien beispielsweise genannt: konjugierte Diene, z.B. Isopren und Budadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B. 5-Ethyliden-2-norbornen, 5-Butyliden-2-norbornen, 2-Methallyl-5-norbornen, 2-Isopropenyl-5-norbornen und Tricyclo-diene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.-% copolymerisierbarem Dien, wie z.B. Butadien, Dimethylbutadien, Pentadien-1,3, insbesondere Isopren. Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed., Bd. 7, S 688, Interscience Publ., New York-London-Sydney 1965 und Winnacker-Küchler, Chemische Technologie, 4. Aufl., Bd. 6, S. 550-555, Carl Hanser Verlag, München-Wien 1962. Unter dem Begriff "Butylkautschuk" sind auch halogenierte Butylkautschuke zu verstehen.

Der Ausdruck "Nitrilkautschuk" steht für Butadien/Acrylnitril-Copolymerisate mit einem Gehalt an copolymerisiertem Acrylnitril von 5 bis 60, vorzugsweise 10 bis 50 Gew.-%. "Hydriert" bedeutet in diesem Zusammenhang, daß 90 bis 98,5, vorzugsweise 95 bis 98 % der hydrierbaren C=C-Doppelbindungen hydriert sind, während die C≡N-Dreifachbindungen der Nitrilgruppen nicht hydriert sind. Die Hydrierung von Nitrilkautschuk ist bekannt; US-A- 3 700 637, DE-OS 25 39 132, 30 46 008, 30 46 251, 32 27 650, 33 29 974, EP-A 111 412, FR-A- 2 540 503.

Bevorzugte Styrol/Butadien-Copolymerisate sind solche mit Gehalten an einpolymerisiertem Styrol von 18 bis 60, vorzugsweise 20 bis 50, Gew.-%. Lösungs- und Emulsionspolymerisate sind besonders bevorzugt.

Den erfindungsgemäßen Kautschukmischungen können selbstverständlich Füllstoffe jeglicher Art zugesetzt werden. Bevorzugte Füllstoffe sind Ruße. Bevorzugte Ruße besitzen Oberflächen von 35 bis 200 m²/g (CTAB-Bestimmung). Besonders bevorzugte Ruße sind SAF-, HAF-, FEF-, ISAF- und SRF-Ruße und ihre Mischungen. Auch Mischungen von Rußen mit Kieselsauren (mit und ohne Füllstoffaktivatoren) und Kieselsäuren, die den Rußen vergleichbare Teilchengrößen und Oberflächen besitzen, sind als Füllstoffe gut geeignet. Der Füllstoffgehalt kann in weiten Bereichen schwanken, liegt aber oft bei 30 bis 80 Gew.-Teilen Füllstoff pro 100 Gewichtsteile Kautschuk (A+B).

Die erfindungsgemäßen Mischungen können auf verschiedene Weise hergestellt werden: zum einen ist es selbstverständlich möglich, die festen Einzelkomponenten zu mischen. Dafür geeignete Aggregate sind beispielsweise Walzen und Innenmischer. Aber auch das Mischen durch Vereinigen der Latices der einzelnen Kautschuke ist geeignet; die Isolierung der so hergestellten erfindungsgemäßen Mischungen kann, wie üblich, durch Eindampfen, Ausfällen oder Gefrierkoagulation (vgl. US-A-2 187 146) erfolgen. Durch Einmischen von Füllstoffen in die Latexmischungen und anschließende Aufarbeitung können die erfindungsgemäßen Mischungen direkt als Kautschuk/Füllstoff-Formulierungen erhalten werden. Weiterer Gegenstand der Erfindung ist also ein Verfahren zur Herstellung der beschriebenen Mischungen durch Vereinigen der Komponenten.

Zur Erzielung erwünschter Rohmischungs- oder Vulkanisateigenschaften können den erfindungsgemäßen Mischungen die üblichen Verarbeitungshilfsmittel, Weichmacher, Alterungsschutzmittel, Faktisse und Harze zugesetzt werden.

Als Vernetsungssysteme kommen alle in der Kautschuktechnik bekannten Systeme wie Schwefelvernetzung, Peroxidvernetzung, Urethanvernetzung, Metalloxidvernetzung, Harzvernetzung, Strahlenvernetzung und deren Kombinationen in Frage. Bevorzugte Vernetzungssysteme richten sich nach den in den erfindungsgemäßen Mischungen eingesetzten Kautschuken B, wobei Schwefelvernetzungssysteme besonders bevorzugt sind.

Weiterer Gegenstand der Erfindung sind die aus den beschriebenen Mischungen hergestellten Vulkanisate.

Die Vulkanisate der erfindungsgemäßen Mischungen zeigen verminderte Hystereseverluste und hohe Abriebbeständigkeit und eignen sich daher hervorragend für die Herstellung von Reifen.

Die folgenden Beispiele beschreiben die vorliegende Erfindung, ohne sie jedoch einzuschränken.

Beispiele

1. Herstellung der BR-Gele

Ausgangs latex der BR-Gele A bis A5 war der Butadien-Latex 2004 (Handelsprodukt der Bayer Elastomeres, Lillebonne, Frankreich)

BR-Gel A

Zur Isolierung des Kautschuks (BR-Gel A) wurden 100 ml Latex in 200 ml 0,01 molarer, wäßriger Aluminiumsulfatlösung unter intensivem Rühren eingetropft. Das Koagulat wurde abfiltriert, erst mit 1 l demineralisiertem Wasser und anschließend mit 1 l Aceton gewaschen.

Der so behandelte Kautschuk wurde im Vakuumtrockenschrank bei 50°C bis zur Gewichtskonstanz getrocknet.

BR-Gel A 1

In einem 150 ml Laborautoklaven mit temperierbarem Heizmantel wurde der dem BR-Gel A zugrundeliegende Latex vorgelegt und 0,16 Gew.-% Dicumylperoxid, bezogen auf den Kautschuk, zugegeben.

Der Autoklav wurde verschlossen und mit 8 bar Stickstoff beaufschlagt. Unter Rühren wurde die Mischung auf 60°C aufgeheizt und 2 Stunden bei dieser Temperatur gerührt. Anschließend wurde auf 150°C aufgeheizt und 45 Minuten bei dieser Temperatur gerührt. Es wurde auf Raumtemperatur abgekühlt, der Latex entnommen und zur Isolierung des Kautschuks koaguliert. Die Isolierung erfolgte wie bei BR-Gel A beschrieben.

BR-Gel A 2

Die Herstellung erfolgte wie bei BR-Gel A 1 beschrieben. Es wurde der dem BR-Gel A zugrundeliegende Latex und 0,32 Gew.-% Dicumylperoxid, bezogen auf Kautschuk eingesetzt.

BR-Gel A 3

Die Herstellung erfolgte wie bei BR-Gel A 1 beschrieben. Es wurde der dem BR-Gel A zugrundeliegende Latex und 0,48 Gew.-% Dicumylperoxid, bezogen auf Kautschuk, eingesetzt.

BR-Gel A 4

Die Herstellung erfolgte wie bei BR-Gel A 1 beschrieben. Es wurde der dem BR-Gel A zugrundeliegende Latex und 0,64 Gew.-% Dicumylperoxid, bezogen auf Kautschuk, eingesetzt.

BR-Gel A 5

Die Herstellung erfolgte wie bei BR-Gel A 1 beschrieben Es wurde der dem BR-Gel A zugrundeliegende Latex und 0,80 Gew.-% Dicumylperoxid, bezogen auf Kautschuk, eingesetzt.

Herstellung des Ausgangslatex für BR-Gel B

In einem 250 l Kessel wurde die wäßrige Phase, bestehend aus 153,5 Gew.-Teilen entmineralisiertem Wasser, 5,0 Gew.-Teilen disproportionierter Harzsäure (70 %ig, Na-Salz) und 13 Gew.-Teilen 1 N Natronlauge vorgelegt und mit Stickstoff gespült. Nach der Zugabe von 0,3 Gew.-Teilen n-Dodecylmercaptan wurde zweimal evakuiert und mit Stickstoff ausgeglichen. Dann wurden 100 Gew.-Teile Butadien zugegeben, die Emulsion unter Rühren auf 60°C aufgeheizt und nach Erreichen der Temperatur die Polymerisation durch Zugabe einer wäßrigen Lösung bestehend aus 0,23 Gew.-Teilen Kaliumperoxodisulfat und 10 Gew.-Teilen entmineralisiertem Wasser gestartet.

Nach dem Polymerisationsstart wurde die Temperatur auf 55°C eingestellt und 31 Stunden bis zu einem Monomerumsatz von 99,9 % polymerisiert. Es wurde auf Raumtemperatur abgekühlt und das nicht umgesetzte Monomere durch Rühren unter Vakuum entfernt.

BR-Gel B

Die Herstellung erfolgte wie bei BR-Gel A 1 beschrieben. Es wurde der Ausgangslatex und 0,64 Gew.-% Dicumylperoxid, bezogen auf Kautschuk, eingesetzt.

Die folgende Tabelle zeigt die hergestellten BR-Gele im Überblick:

Tabelle 1

|  | Teilchengröße* des Ausgangslatex (nm) | Gelcharakteristika | |
|---|---|---|---|
|  |  | Gelgehalt (%) in Toluol | Quellungsindex |
| Ausgangslatex für BR-Gele A bis A 5 | 281 |  |  |
| BR-Gel A |  | 80 | 18 |
| BR-Gel A 1 |  | 96 | 17 |
| BR-Gel A 2 |  | > 99 | 12 |
| BR-Gel A 3 |  | > 99 | 10 |
| BR-Gel A 4 |  | > 99 | 7 |
| BR-Gel A 5 |  | > 99 | 8 |
| Ausgangslatex für BR-Gel B | 98 |  |  |
| BR-Gel B |  | > 99 | 2,5 |

\* DVN-Wert nach DIN 53 206, siehe auch H.G. Müller, Colloid Polym. Sci 267, Seite 1113 bis 1116 (1989).

2. Herstellung der Testmischungen

Testmischung 1

Die Testmischung hatte folgende Zusammensetzung:

80 Gew.-Teile NR [1]
20 Gew.-Teile BR-Gel (s. Tabelle 2)
3,0 Gew.-Teile TMTD [2]
3,0 Gew.-Teile ZnO [3]

Die Mischung der einzelnen Bestandteile erfolgte in einem 60 ml Meßkneter mit Walzenrotoren (Rheocord System 40, Fa. Haake). Die Mischzeit betrug 15 min und die Mischtemperatur 50°C. Die Bestandteile wurden in der Reihenfolge NR, BR-Gel, ZnO und TMTD zugegeben.

Die Vulkanisation der fertigen Mischung erfolgte in einer Laborpresse (WLP 63/3,5/3, Fa. Wickert & Söhne) bei 150°C und einem Pressdruck von 150 bar. Die Vulkanisationszeit ergab sich aus dem in einem Scherviskosimeter DIN 53 529 bei 150°C ermittelten $t_{90}$-Wert plus einem Zuschlag von 2 min. $t_{90}$ ist die Zeit, in der 90 % des im Vulkameter bestimmbaren Umsatzes erreicht ist. In der Laborpresse wurden Platten von 80 x 180 nm und einer Stärke von 2 mm erhalten.

Testmischung 2

Die Testmischung 2 hatte folgende Zusammensetzung:

```
80 Gew.-Teile NR 1)                                    ⎤
   Gew.-Teile BR-Gel                                   ⎥   variabel
   Gew.-Teile CB10 4)                                  ⎥   siehe
   Gew.-Teile Ruß N 330 5) bzw. N 772 6)               ⎬   Tabellen
   Gew.-Teile TMTD 2)                                  ⎥   3 bis 9
   Gew.-Teile ZnO 3)                                   ⎦
```

1)   Naturkautschuk SMR CV 50 (Fa. Weber & Schaer, Hamburg), Kautschukgehalt 61,2 %

2)   Vulkacit TMTD, Tetramethylthiuramdisulfid, Handelsprodukt der Fa. Bayer AG

3)   ZnO-RS, Handelsprodukt der Fa. Zinkweiß-Forschungsgesellschaft mbH / Zinkoxid

4)   CB 10, Handelsprodukt der Fa. Bayer AG, Kobalt-Polybutadien mit einem cis-Gehalt von 96 %

5)   Ruß N 330 Handelsprodukt der Fa. Degussa/Hanau

6)   Ruß N 772 Handelsprodukt der Fa. Degussa/Hanau

Die Mischung der einzelnen Bestandteile erforgte auf einer Laborwalze WNU 1 (Durchmesser 100 mm, Länge 250 mm, Fa. Troester). Die Mischzeit betrug 30 min und die Mischtemperatur 50°C. Die Bestandteile wurden in der Reihenfolge NR, BR-Gel, Ruß, ZnO und TMTD zugegeben.

Die Vulkanisation der fertigen Mischung erfolgte analog der Testmischung 1.

Anwendungstechnische Eigenschaften

An den aus den Testmischungen 1 und 2 erhaltenen Vulkanisaten der Beispiele und der Vergleichsbeispiele wurden verschiedene Daten ermittelt:

| Abkürzung | Bedeutung | Bestimmungsmethode |
|---|---|---|
| F | Zugfestigkeit | DIN 53 504 |
| D | Bruchdehnung (%) | DIN 53 504 |
| M 100 | Spannungswert bei 100 % Dehnung (MPa) | DIN 53 504 |
| M 200 | Spannungswert bei 200 % Dehnung (MPa) | DIN 53 504 |
| M 300 | Spannungswert bei 300 % Dehnung (MPa) | DIN 53 504 |
| M 500 | Spannungswert bei 500 % Dehnung (MPa) | DIN 53 504 |
| E 23 | Elastizität bei 23° C (%) | DIN 53 512 |
| Shore A | Härte | DIN 53 505 |
| ABR | Abrieb auf Schmirgelpapier der Stärke 60 | DIN 53 516 |

| Abkürzung | Bedeutung | Bestimmungs-methode |
|---|---|---|
| tan δ (20) | Tangens δ bei 20°C, 0,5 % Amplitude 1Hz, Vorkraft 200 g | Torsions-messung Mechanisch, Dynamischer Analyser Rheometrics RDA 700 |
| tan δ (70) | Tangens δ bei 70°C, 0,5 % Amplitude 1Hz, Vorkraft 200 g | |
| tan δ (100) | Tangens δ bei 100°C, 0,5 % Amplitude 1Hz, Vorkraft 200 g | |
| G* (20) | Komplexer Elastizitätsmodul bei 20°C | Torsions-messung Mechanisch, Dynamischer Analyser Rheometrics RDA 700 |
| G* (70) | Komplexer Elastizitätsmodul bei 70°C | |
| G* (100) | Komplexer Elastizitätsmodul bei 100°C | |

Nicht an allen Vulkanisaten wurde der gesamte Datensatz ermittelt.

Serie 1

In dieser Serie soll prinzipiell gezeigt werden, daß der Vernetzungsgrad des BR-Gels einen Einfluß auf die Vulkanisateigenschaften der erfindungsgemäßen Kautschuk-Mischungen besitzt. Die Ergebnisse der Serie 1 sind in Tabelle 2 zusammengefaßt.

Die mit der Testmischung 1 erhaltenen Daten zeigen, daß die erfindungsgemäßen Beispiele 1 bis 6 eine günstigere Kombination der Eigenschaften Hystereseverlust und Abrieb als das auf NR basierende Vulkanisat (Vergleichsbeispiel 1) aufweisen. Mit zunehmendem Vernetzungsgrad der BR-Gele wird der Abrieb geringer (Beispiel 1 bis 3) und läuft dann auf ein Plateau aus (Beispiel 4 bis 6). Das gleiche gilt auch für den Hystereseverlust (tan δ), wobei die Beispiele 3, 4 und 5 ein Optimum darstellen.

Serie 2

In der Serie 2 (siehe Tabelle 3) wird gezeigt, daß das Vulkanisat des erfindungsgemäßen Beispiels 7, bei vergleichbarem Spannungswert M 200, in der Kombination der Eigenschaften Hystereseverlust (tan δ) und Abrieb sowohl einem aus NR als auch einem aus NR/BR-Verschnitt hergestelltem Vulkanisat (Vergleichsbeispiele 2 bzw. 3) überlegen ist. Vergleichsbeispiel 2 weist einen deutlich höheren Hystereseverlust und Abrieb als Beispiel 7 auf. Beim Vergleichsbeispiel 3 wird zwar wie bei Beispiel 7 ein geringer Abrieb erhalten, jedoch ist der Hystereseverlust deutlich höher als beim erfindungsgemäßen Beispiel 7.

Serie 3

Die Ergebnisse der Serie 3 (siehe Tabelle 3) zeigen, daß auch bei Einsatz einer geringen Menge an BR-Gel in der erfindungsgemäßen Kautschuk-Mischung der Vorteil der Erfindung sichtbar wird. Bei vergleichbarem Spannungswert M 200 und Abrieb zeigt das erfindungsgemäße Beispiel 8 einen geringeren Hystereseverlust als ein NR-Vulkanisat (Vergleichsbeispiel 4).

Serie 4

Bei dem erfindungsgemäßen Beispiel 9 wurde in der Kautschuk-Mischung ein BR-Gel eingesetzt (BR-Gel A 4), dessen Herstellung auf einem Latex mit einem größeren Teilchendurchmesser basiert, als es bei den erfindungsgemäßen Beispielen der Serie 2 und 3 der Fall war.

Auch das erfindungsgemäße Beispiel 9 ist bei vergleichbarem Spannungswert M 200, einem NR-Vulkanisat (Vergleichsbeispiel 2) in der Kombination der Eigenschaften Hystereseverlust (tan δ) und Abrieb überlegen (siehe Tabelle 4).

Serie 5

Bei dem erfindungsgemäßen Beispiel 10 wurde dasselbe BR-Gel verwendet, wie beim Beispiel 9 der Serie 4, jedoch in einer geringeren Menge. Bei vergleichbarem Spannungswert M 200 zeigt das erfindungsgemäße Beispiel 10 einen geringfügig höheren Abrieb als das Vergleichsbeispiel 4, aber einen geringeren Hystereseverlust (siehe Tabelle 4).

Serie 6

Die Serie 6 (siehe Tabelle 5) soll zeigen, daß die Vorteile der erfindungsgemäßen Kautschuk-Mischungen auch bei Verwendung eines weniger aktiven Rußes (N 772) sichtbar werden. Das erfindungsgemäße Beispiel 11 weist bei vergleichbarem Spannungswert M 200 die bessere Kombination der Eigenschaften Hystereseverlust (tan δ) und Abrieb auf als ein NR/BR-Verschnitt (Vergleichsbeispiel 5).

Serie 7

Die Serie 7 zeigt (siehe Tabelle 6), daß das System der erfindungsgemäßen Kautschuk-Mischungen flexibel ist. Der Anteil an BR-Gel in der Kautschuk-Mischung (erfindungsgemäße Beispiele 7 und 12) kann breit variiert werden, wobei die Vorteile beim Hystereseverlust (tan δ) und Abrieb erhalten bleiben. Die erfindungsgemäßen Beispiele 7 und 12 sind einem NR-Vulkanisat (Vergleichsbeispiel 2) überlegen. Das auf einen vergleichbaren Spannungswert M200 vulkanisierte Vergleichsbeispiel 3 zeigt zwar wie die erfindungsgemäßen Beispiele 7 und 12 einen geringen Abrieb, der niedrige Hystereseverlust (tan δ) wird jedoch nicht erreicht.

Serie 8

Die Ergebnisse der Serie 8 (siehe Tabelle 7) zeigen, daß das System der erfindungsgemäßen Kautschuk-Mischungen im Hinblick auf den Vernetzungsgrad des eingesetzten BR-Gels auch bei Ruß-gefüllten Mischungen variiert werden kann. Sowohl der Einsatz von geringer vernetztem (Beispiel 13) als auch von höher vernetztem BR-Gel (Beispiel 9) führt zu Vulkanisaten, die eine günstigere Kombination der Eigenschaften Hystereseverlust (tan δ) und Abriebbeständigkeit als ein NR-Vulkanisat (Vergleichsbeispiel 2) aufweisen.

Serie 9

Serie 9 (siehe Tabelle 8) zeigt, daß zwar höhere Vernetzungsgrade des NR (Variation der Beschleunigermenge, Vergleichsbeispiel 2, 6, 7 und 8) zu günstigeren Hystereseverlusten (tan δ) führen, aber nicht zur gleichzeitigen Verringerung des Abriebs. Das erfindungsgemäße Beispiel 7 ist den Vergleichsbeispielen 2, 6, 7 und 8 sowohl beim Hystereseverlust als auch bei der Abriebbeständigkeit überlegen.

Serie 10

Serie 10 (siehe Tabelle 9) zeigt, daß eine Erhöhung der Rußmenge nicht zu NR-Vulkanisaten führt (Vergleichsbeispiele 2, 9, 10 und 11), die die günstigen Eigenschaften (tan δ und Abrieb) des erfindungsgemäßen Beispiels 7 aufweisen.

EP 0 575 851 B1

Tabelle 2    Herstellung und Eigenschaften der erfindungsgemäßen Beispiele
             1 bis 6 und des Vergleichsbeispiels 1

|  | Kautschuk-Mischung (Gew.-Teile) | Test-mischung | Anwendungstechnische Eigenschaften | | | | | |
|---|---|---|---|---|---|---|---|---|
|  |  |  | F | D | M300 | E 23 | ABR[1] | tan δ (20) |
| Bsp. 1 | 80 NR 20 BR-Gel A | 1 | 15,2 | 670 | 1,3 | 65,8 | 72 | 0,037 |
| Bsp. 2 | 80 NR 20 BR-Gel A 1 | 1 | 16,8 | 662 | 1,4 | 66,4 | 71 | 0,036 |
| Bsp. 3 | 80 NR 20 BR-Gel A 2 | 1 | 18,4 | 655 | 1,6 | 67,2 | 56 | 0,032 |
| Bsp. 4 | 80 NR 20 BR-Gel A 3 | 1 | 18,9 | 615 | 2,0 | 67,6 | 51 | 0,031 |
| Bsp. 5 | 80 NR 20 BR-Gel A 4 | 1 | 18,6 | 610 | 2,3 | 68,4 | 49 | 0,030 |
| Bsp. 6 | 80 NR 20 BR-Gel A 5 | 1 | 17,6 | 610 | 2,3 | 67,6 | 51 | 0,034 |
| Vergl.-Bsp. 1 | 80 NR 0 BR-Gel | 1 | 16,0 | 700 | 1,2 | 67,4 | 74 | 0,037 |

1) Abweichend von DIN 53 516 wurde bei dieser Serie der Abrieb mit 5N Auflagekraft
   bestimmt

Tabelle 3

| Herstellung und Eigenschaften der erfindungsgemäßen Beispiele 7 und 8 und der Vergleichsbeispiele 2, 3 und 4 (Testmischung 2) | | | | | |
|---|---|---|---|---|---|
| | Serie 2 | | | Serie 3 | |
| | Bsp.7 | Vergleichsbeispiele | | Bsp.8 | Vergleichsbeispiel 4 |
| | | 2 | 3 | | |
| NR (Gew.-Teile) | 80 | 80 | 80 | 80 | 80 |
| BR-Gel B (Gew.-Teile) | 20 | - | - | 10 | - |
| CB 10 (Gew.-Teile) | - | - | 20 | - | - |
| Ruß N 330 (Gew.-Teile) | 50 | 50 | 63 | 67 | 67 |
| TMTD | 3,0 | 3,0 | 3,5 | 3,0 | 3,0 |
| ZnO (Gew.-Teile) | 3,0 | 3,0 | 3,5 | 3,0 | 3,0 |
| M 200 | 10,9 | 10,7 | 10,8 | 15,8 | 15,9 |
| ABR | 76 | 104 | 70 | 107 | 99 |
| Dichte | 1,114 | 1,148 | 1,140 | 1,176 | 1,198 |
| Shore A | 72,5 | 72,9 | 70,4 | 81,8 | 83,5 |
| E 23 | 49,5 | 42,7 | 48,5 | 38,6 | 35,5 |
| tan δ | | | | | |
| (20) | 0,108 | 0,181 | 0,124 | 0,165 | 0,180 |
| (70) | 0,107 | 0,190 | 0,122 | 0,156 | 0,176 |
| (100) | 0,094 | 0,156 | 0,105 | 0,136 | 0,159 |
| G* | | | | | |
| (20) | 10,01 | 10,85 | 9,74 | 19,88 | 23,54 |
| (70) | 7,44 | 6,85 | 6,99 | 12,92 | 14,87 |
| (100) | 6,69 | 5,99 | 6,36 | 11,01 | 12,34 |

Tabelle 4

| Herstellung und Eigenschaften der erfindungsgemäßen Beispiele 9 und 10 und der Vergleichsbeispiele 2 und 4 (Testmischung 2) | | | | |
|---|---|---|---|---|
| | Serie 4 | | Serie 5 | |
| | Bsp.9 | Vergleichsbeispiel 2 | Bsp.10 | Vergleichsbeispiel 4 |
| NR (Gew.-Teile) | 80 | 80 | 80 | 80 |

Tabelle 4   (fortgesetzt)

| Herstellung und Eigenschaften der erfindungsgemäßen Beispiele 9 und 10 und der Vergleichsbeispiele 2 und 4 (Testmischung 2) | | | | |
|---|---|---|---|---|
| | Serie 4 | | Serie 5 | |
| | Bsp.9 | Vergleichsbeispiel 2 | Bsp.10 | Vergleichsbeispiel 4 |
| BR-Gel A 4 (Gew.-Teile) | 20 | - | 10 | - |
| Ruß N 330 (Gew.-Teile) | 50 | 50 | 67 | 67 |
| TMTD | 3,0 | 3,0 | 3,0 | 3,0 |
| ZnO (Gew.-Teile) | 3,0 | 3,0 | 3,0 | 3,0 |
| M 200 | 10,5 | 10,7 | 14,8 | 15,9 |
| ABR | 99 | 104 | 113 | 99 |
| Dichte | 1,113 | 1,148 | 1,175 | 1,198 |
| Shore A | 69,5 | 72,9 | 81,3 | 83,5 |
| E 23 | 47,8 | 42,7 | 37,2 | 35,5 |
| tan δ | | | | |
| (20) | 0,138 | 0,181 | 0,163 | 0,180 |
| (70) | 0,139 | 0,190 | 0,156 | 0,176 |
| (100) | 0,126 | 0,156 | 0,137 | 0,159 |
| G* | | | | |
| (20) | 9,64 | 10,85 | 22,03 | 23,54 |
| (70) | 6,94 | 6,85 | 14,67 | 14,87 |
| (100) | 6,17 | 5,99 | 12,38 | 12,34 |

Tabelle 5

| Herstellung und Eigenschaften des erfindungsgemäßen Beispiels 11 und des Vergleichsbeispiels 5 (Testmischung 2) | | |
|---|---|---|
| | Serie 6 | |
| | Beispiel 11 | Vergleichsbeispiel 5 |
| NR (Gew.-Teile) | 80 | 80 |
| BR-Gel B (Gew.-Teile) | 20 | - |
| CB 10 (Gew.-Teile) | - | 20 |

Tabelle 5 (fortgesetzt)

| Herstellung und Eigenschaften des erfindungsgemäßen Beispiels 11 und des Vergleichsbeispiels 5 (Testmischung 2) | | |
|---|---|---|
| | Serie 6 | |
| | Beispiel 11 | Vergleichsbeispiel 5 |
| Ruß N 772 (Gew.-Teile) | 50 | 65 |
| TMTD | 3,0 | 3,5 |
| ZnO (Gew.-Teile) | 3,0 | 3,5 |
| M 200 | 8,1 | 7,6 |
| ABR | 140 | 146 |
| Dichte | 1,121 | 1,158 |
| Shore A | 61,5 | 61,7 |
| E 23 | 58,7 | 56,5 |
| tan δ | | |
| (20) | 0,075 | 0,094 |
| (70) | 0,078 | 0,093 |
| (100) | 0,067 | 0,080 |
| G* | | |
| (20) | 3,84 | 4,38 |
| (70) | 3,07 | 3,45 |
| (100) | 3,06 | 3,41 |

Tabelle 6

| Herstellung und Eigenschaften der erfindungsgemäßen Beispiele 7 und 12 und der Vergleichsbeispiele 2 und 3 (Testmischung 2) | | | | |
|---|---|---|---|---|
| | Serie 7 | | | |
| | Bsp.7 | Bsp.12 | Vergleichsbeispiel 2 | Vergleichsbeispiel 3 |
| NR (Gew.-Teile) | 80 | 80 | 80 | 80 |
| BR-Gel B (Gew.-Teile) | 20 | 30 | - | - |
| CB 10 (Gew.-Teile) | - | - | - | 20 |
| Ruß N 330 (Gew.-Teile) | 50 | 50 | 50 | 63 |
| TMTD | 3,0 | 3,0 | 3,0 | 3,5 |

Tabelle 6   (fortgesetzt)

| Herstellung und Eigenschaften der erfindungsgemäßen Beispiele 7 und 12 und der Vergleichsbeispiele 2 und 3 (Testmischung 2) | | | | |
|---|---|---|---|---|
| | Serie 7 | | | |
| | Bsp.7 | Bsp.12 | Vergleichsbeispiel 2 | Vergleichsbeispiel 3 |
| ZnO (Gew.-Teile) | 3,0 | 3,0 | 3,0 | 3,5 |
| M 200 | 10,9 | 11,5 | 10,7 | 10,8 |
| ABR | 76 | 83 | 104 | 70 |
| Dichte | 1,114 | 1,103 | 1,148 | 1,140 |
| Shore A | 72,5 | 72,5 | 72,9 | 70,4 |
| E 23 | 49,5 | 49,2 | 42,7 | 48,5 |
| tan δ | | | | |
| (20) | 0,108 | 0,110 | 0,181 | 0,124 |
| (70) | 0,107 | 0,110 | 0,190 | 0,122 |
| (100) | 0,094 | 0,090 | 0,156 | 0,105 |
| G* | | | | |
| (20) | 10,01 | 9,95 | 10,85 | 9,74 |
| (70) | 7,44 | 7,65 | 6,85 | 6,99 |
| (100) | 6,69 | 6,65 | 5,99 | 6,36 |

Tabelle 7

| Herstellung und Eigenschaften der erfindungsgemäßen Beispiele 13 und 9 und der Vergleichsbeispiels 2 (Testmischung 2) | | | |
|---|---|---|---|
| | Serie 8 | | |
| | Bsp.13 | Bsp.9 | Vergleichsbeispiel 2 |
| NR (Gew.-Teile) | 80 | 80 | 80 |
| BR-Gel A (Gew.-Teile) | 20 | - | - |
| BR-Gel A 4 (Gew.-Teile) | - | 20 | - |
| Ruß N 330 (Gew.-Teile) | 50 | 50 | 50 |
| TMTD | 3,0 | 3,0 | 3,0 |
| ZnO (Gew.-Teile) | 3,0 | 3,0 | 3,0 |
| M 200 | 7,4 | 10,5 | 10,7 |

Tabelle 7   (fortgesetzt)

| Herstellung und Eigenschaften der erfindungsgemäßen Beispiele 13 und 9 und der Vergleichsbeispiels 2 (Testmischung 2) | | | |
|---|---|---|---|
| | Serie 8 | | |
| | Bsp.13 | Bsp.9 | Vergleichsbeispiel 2 |
| ABR | 106 | 99 | 104 |
| Dichte | 1,110 | 1,113 | 1,148 |
| Shore A | 67,4 | 69,5 | 72,9 |
| E 23 | 45,0 | 47,8 | 42,7 |
| tan δ | | | |
| (20) | 0,134 | 0,138 | 0,181 |
| (70) | 0,137 | 0,139 | 0,190 |
| (100) | 0,120 | 0,126 | 0,156 |
| G* | | | |
| (20) | 8,74 | 9,64 | 10,85 |
| (70) | 6,23 | 6,94 | 6,85 |
| (100) | 5,49 | 6,17 | 5,99 |

Tabelle 8

| Herstellung und Eigenschaften des erfindungsgemäßen Beispiels 7 und der Vergleichsbeispiele 2, 6, 7 und 8 (Testmischung 2) | | | | | |
|---|---|---|---|---|---|
| | Serie 9 | | | | |
| | Bsp.7 | Vergleichsbeispiele | | | |
| | | 2 | 6 | 7 | 8 |
| NR (Gew.-Teile) | 80 | 80 | 80 | 80 | 80 |
| BR-Gel B (Gew.-Teile) | 20 | - | - | - | - |
| Ruß N 330 (Gew.-Teile) | 50 | 50 | 50 | 50 | 50 |
| TMTD | 3,0 | 3,0 | 3,5 | 3,75 | 4,0 |
| ZnO (Gew.-Teile) | 3,0 | 3,0 | 3,5 | 3,75 | 4,0 |
| M 200 | 10,9 | 10,7 | 12,5 | 12,7 | 14,1 |
| ABR | 76 | 104 | 102 | 105 | 103 |
| Dichte | 1,114 | 1,148 | 1,156 | 1,160 | 1,162 |

Tabelle 8 (fortgesetzt)

| Herstellung und Eigenschaften des erfindungsgemäßen Beispiels 7 und der Vergleichsbeispiele 2, 6, 7 und 8 (Testmischung 2) | | | | | |
|---|---|---|---|---|---|
| | Serie 9 | | | | |
| | Bsp.7 | Vergleichsbeispiele | | | |
| | | 2 | 6 | 7 | 8 |
| Shore A | 72,5 | 72,9 | 72,2 | 73,1 | 73,7 |
| E 23 | 49,5 | 42,7 | 43,5 | 43,5 | 44,0 |
| tan δ | | | | | |
| (20) | 0,108 | 0,181 | 0,149 | 0,145 | 0,125 |
| (70) | 0,107 | 0,190 | 0,152 | 0,137 | 0,117 |
| (100) | 0,094 | 0,156 | 0,134 | 0,120 | 0,108 |
| G* | | | | | |
| (20) | 10,01 | 10,85 | 11,30 | 16,30 | 10,65 |
| (70) | 7,44 | 6,85 | 7,54 | 11,90 | 7,61 |
| (100) | 6,69 | 5,99 | 6,70 | 10,30 | 6,79 |

Tabelle 9

| Herstellung und Eigenschaften des erfindungsgemäßen Beispiels 7 und der Vergleichsbeispiele 2, 9, 10 und 11 (Testmischung 2) | | | | | |
|---|---|---|---|---|---|
| | Serie 10 | | | | |
| | Bsp.7 | Vergleichsbeispiele | | | |
| | | 2 | 9 | 10 | 11 |
| NR (Gew.-Teile) | 80 | 80 | 80 | 80 | 80 |
| BR-Gel B (Gew.-Teile) | 20 | - | - | - | - |
| Ruß N 330 (Gew.-Teile) | 50 | 50 | 54 | 67 | 85 |
| TMTD | 3,0 | 3,0 | 3,0 | 3,0 | 3,0 |
| ZnO (Gew.-Teile) | 3,0 | 3,0 | 3,0 | 3,0 | 3,0 |
| M 200 | 10,9 | 10,7 | 11,8 | 15,9 | - |
| ABR | 76 | 104 | 95 | 99 | 135 |
| Dichte | 1,114 | 1,148 | 1,160 | 1,198 | 1,242 |
| Shore A | 72,5 | 72,9 | 74,5 | 83,5 | 91,8 |
| E 23 | 49,5 | 42,7 | 41,1 | 35,5 | 31,8 |

Tabelle 9   (fortgesetzt)

| Herstellung und Eigenschaften des erfindungsgemäßen Beispiels 7 und der Vergleichsbeispiele 2, 9, 10 und 11 (Testmischung 2) | | | | | |
|---|---|---|---|---|---|
| | Serie 10 | | | | |
| | Bsp.7 | Vergleichsbeispiele | | | |
| | | 2 | 9 | 10 | 11 |
| tan δ | | | | | |
| (20) | 0,108 | 0,181 | 0,156 | 0,180 | 0,186 |
| (70) | 0,107 | 0,190 | 0,147 | 0,176 | 0,179 |
| (100) | 0,094 | 0,156 | 0,127 | 0,159 | 0,159 |
| G* | | | | | |
| (20) | 10,01 | 10,85 | 13,32 | 23,54 | 39,90 |
| (70) | 7,44 | 6,85 | 8,69 | 14,87 | 20,97 |
| (100) | 6,69 | 5,99 | 7,49 | 12,34 | 16,75 |

**Patentansprüche**

1.  Mischungen aus

    A) einem Polybutadien-Gel, hergestellt durch Emulsionspolymerisation, das einen Quellungsindex in Toluol von 1 bis 90 aufweist und eine Teilchengröße von 30 bis 500 nm besitzt, und

    B) anderen C=C-Doppelbindungen enthaltenden Kautschuken, bezogen auf die Summe A) + B), die Menge an Polybutadien-Gel A) 1 bis 70 Gew.-% beträgt.

2.  Verwendung der Mischungen des Anspruchs 1 zur Herstellung von Vulkanisaten.

**Claims**

1.  Mixtures prepared from

    A) a polybutadiene gel produced by emulsion polymerisation which has a swelling index in toluene of 1 to 90 and a particle size of 30 to 500 nm and

    B) other rubbers containing C=C double bonds, [wherein] relative to the sum of A) + B), the quantity of polybutadiene gel A) is 1 to 70 wt.%.

2.  Use of the mixtures of claim 1 for the production of vulcanisates.

**Revendications**

1.  Mélanges de

    A) un gel de polybutadiène préparé par polymérisation en émulsion, qui a un indice de gonflement dans le toluène de 1 à 90 et une dimension de particule de 300 à 500 nm et
    B) d'autres caoutchoucs contenant des doubles liaisons C=C,

    la quantité du gel de polybutadiène A) représentant de 1 à 70% du poids du total A)+B).

2.  Utilisation des mélanges de la revendication 1 pour la fabrication de vulcanisats.